(19) **Europäisches Patentamt / European Patent Office / Office européen des brevets**

(11) **EP 3 234 396 B1**

(12) # FASCICULE DE BREVET EUROPEEN

(45) Date de publication et mention
de la délivrance du brevet:
**19.09.2018 Bulletin 2018/38**

(21) Numéro de dépôt: **15805453.6**

(22) Date de dépôt: **04.12.2015**

(51) Int Cl.:
***F16D 25/08*** *(2006.01)*

(86) Numéro de dépôt international:
**PCT/EP2015/078621**

(87) Numéro de publication internationale:
**WO 2016/096473 (23.06.2016 Gazette 2016/25)**

(54) **DISPOSITIF POUR EMBRAYAGE POUR VEHICULE AUTOMOBILE**

KUPPLUNGSVORRICHTUNG FÜR EIN KRAFTFAHRZEUG

MOTOR VEHICLE CLUTCH DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1463010**

(43) Date de publication de la demande:
**25.10.2017 Bulletin 2017/43**

(73) Titulaire: **Valeo Embrayages**
**80009 Amiens Cedex 2 (FR)**

(72) Inventeurs:
• **BRAILLY, Julien**
**80260 Naours (FR)**

• **DEQUESNES, Laurent**
**80800 Fouilloy (FR)**

(74) Mandataire: **Cardon, Nicolas et al**
**Valeo Embrayages**
**Sce Propriété Intellectuelle**
**Le Delta**
**14, avenue des Béguines**
**95892 Cergy Pontoise Cedex (FR)**

(56) Documents cités:
**EP-A1- 1 801 445      DE-A1-102009 010 133**
**DE-A1-102009 030 974   US-A- 4 620 625**

Printed by Jouve, 75001 PARIS (FR)

**Description**

L'invention se rapporte à un dispositif pour embrayage pour véhicule automobile. Pour l'état de la technique plus proche, voir DE102009030974 A1. Plus précisément, l'invention concerne un perfectionnement aux dispositifs pour embrayage associé à un mécanisme d'embrayage et à un actionneur d'embrayage dont la fonction est de mettre alternativement le mécanisme d'embrayage en position embrayée, puis en position débrayée. L'invention concerne également un dispositif de transmission de couple dans lequel le mécanisme d'embrayage est fixé en rotation sur le volant moteur du moteur à combustion interne et dans lequel un disque de friction est assemblé sur l'arbre d'entrée de la boite de vitesse par l'intermédiaire d'un moyeu. Le disque de friction est pincé entre le volant moteur et le mécanisme d'embrayage lorsque celui-ci est en position embrayé, pour transmettre le couple du moteur aux roues motrices du véhicule.

Un tel dispositif de transmission de couple est décrit, par exemple, dans la demande de brevet FR 2 082 870. Le dispositif de transmission de couple comprend un volant moteur, un mécanisme d'embrayage et une commande d'embrayage. La commande d'embrayage est équipée d'une butée d'actionnement et d'un moyen d'assistance interne pour réduire les efforts à la pédale que doit exercer le conducteur pour débrayer. Pour ne pas retransmettre intégralement les efforts exercés par la butée d'actionnement suivant l'axe de la transmission aux paliers à roulements supportant le volant moteur, la commande d'embrayage est fixée directement sur le couvercle du mécanisme, à l'aide de boulons de fixation. Cette fixation est une opération d'assemblage longue et fastidieuse, nécessitant également l'emploi d'outillage spécifique sur la chaine d'assemblage. Cependant, il s'avère que la fixation directe de la commande d'embrayage sur le couvercle par une fixation rigide ne soit pas satisfaisante en termes de résistance mécanique dans le temps de la commande d'embrayage. Lors des opérations successives d'embrayage et de débrayage, le couvercle du mécanisme est soumis à des mouvements de flexion suivant l'axe de transmission en raison des efforts d'actionnement généré par la butée d'actionnement sur le diaphragme du mécanisme. La transmission de ces mouvements axiaux, via la fixation rigide de la commande, peut avoir un impact négatif sur la durabilité des composants de la commande, notamment les paliers à roulements internes, qui ne sont pas conçus pour supporter ce type de mouvement.

L'invention vise à remédier à ce problème technique en supprimant ou, tout au moins, en réduisant de façon significative la transmission des mouvements axiaux dans la commande d'embrayage. L'invention a également pour but d'apporter une solution simple, efficace et économique à la problématique d'assemblage de la commande sur le mécanisme d'embrayage.

**EXPOSÉ DE L'INVENTION**

A cet effet, l'invention a pour objet, selon un de ses aspects, un dispositif pour embrayage pour véhicule automobile, comprenant :

- • un couvercle de mécanisme d'embrayage,
- • un support de commande d'embrayage, et
- • un jonc annulaire de fixation du couvercle et du support,

caractérisé en ce que le couvercle comporte une paroi en regard d'une paroi du support, lesdites parois en regard définissant un passage pour le jonc annulaire lors de l'assemblage du support sur le couvercle, ce passage présentant une première portion dans laquelle le jonc annulaire présente un premier état de déformation par rapport à sa forme à l'état libre, et une deuxième portion dans laquelle le jonc annulaire se détend de manière à présenter un deuxième état de déformation une fois le support assemblé sur le couvercle.

Ce dispositif pour embrayage, selon l'invention, présente l'avantage, de proposer un sous-ensemble préassemblé qui peut être livré directement chez le constructeur. L'assemblage de ce sous-ensemble est facilité par la capacité laissée au jonc annulaire de prendre deux états de déformation différents pendant l'opération de « clipsage ». Ce dispositif pour embrayage laisse également la possibilité pour le constructeur d'assembler la commande d'embrayage de son choix indépendamment du fournisseur du mécanisme d'embrayage.

Ce dispositif pour embrayage présente également l'avantage, grâce à l'emploi d'un jonc annulaire de découpler le couvercle de mécanisme d'embrayage du support de commande d'embrayage. On évite de cette manière la transmission des vibrations issues du volant moteur, via le couvercle, aux composants de la commande d'embrayage. Le conducteur ne ressent donc pas les vibrations au travers de la pédale d'embrayage et n'est pas gêné par ce ressenti. On évite également la transmission des mouvements axiaux générés par la flexion du couvercle dans la commande d'embrayage.

L'invention peut en outre, additionnellement présenter l'une ou l'autre des caractéristiques décrites ci-dessous combinées entre elles ou prises indépendamment les unes des autres :

- - De préférence, le jonc annulaire présente en section, dans un plan qui contient l'axe du dispositif, un profil circulaire.
- - Le jonc annulaire est discontinu.
- - La paroi du couvercle est cylindrique et le couvercle comporte une gorge circonférentielle qui débouche dans la paroi cylindrique.
- - La gorge du couvercle comporte une surface d'interface avec ledit jonc annulaire, ladite surface d'interface présentant une forme tronconique.
- - La paroi du support comporte une portion cylindrique et un rebord circonférentiel faisant saillie par rapport à la portion cylindrique.

- Le rebord circonférentiel comporte une zone d'interface avec ledit jonc annulaire, ladite zone d'interface présentant un rayon de courbure qui épouse la géométrie du jonc annulaire.

- De préférence, la zone d'interface présente une forme torique.

- La surface d'interface, la zone d'interface et le jonc annulaire sont en coopération de forme de manière à permettre la transmission d'un effort selon l'axe du dispositif dans le sens où le support s'éloigne du couvercle, une fois le support assemblé sur le couvercle.

- Le rebord comporte une surface chanfreinée destinée à coopérer avec le jonc annulaire lors de l'opération d'assemblage et la surface chanfreinée s'étend axialement jusqu'à une extrémité axiale de la paroi du support de commande d'embrayage.

- Le jonc annulaire est logé axialement dans la gorge du couvercle.

- Le couvercle comporte un fond s'étendant radialement prolongé à son bord périphérique interne par la paroi cylindrique du couvercle.

- En variante, la paroi cylindrique du couvercle est rapportée sur le fond du couvercle par rivetage.

- En variante, la paroi cylindrique du couvercle est rapportée sur le fond du couvercle par vissage.

- Le couvercle supporte sur sa paroi cylindrique une rondelle de stockage destinée à maintenir en position le jonc annulaire lors de l'opération d'assemblage de la commande d'embrayage sur le mécanisme d'embrayage.

- Le support est porté par la commande d'embrayage par l'intermédiaire d'un palier à roulements.

- De préférence, le palier à roulements est un roulement à bille et le palier à roulements comporte une bague de roulement extérieure ou intérieure qui est solidaire en rotation du support.

- En variante, le support fait partie intégrante du palier à roulements.

- Avantageusement, la bague de roulement extérieure ou intérieure du palier à roulements comporte une piste de roulement conformée directement dans le support.

- Une fois le support assemblé sur le couvercle, ledit dispositif pour embrayage ne peut plus être démonté.

- Le dispositif pour embrayage est associé à un mécanisme d'embrayage et à une commande d'embrayage.

- Le mécanisme d'embrayage comprend au moins un diaphragme.

- La commande d'embrayage comprend :

  • une embase, servant de tube guide,
  • un palier à roulements,
  • un support de commande d'embrayage, monté à rotation sur l'embase par l'intermédiaire du palier à roulements,

- La commande d'embrayage comprend également :

  • un piston d'actionnement mobile axialement par rapport à l'embase,
  • une butée d'actionnement fixée axialement sur le piston d'actionnement, destinée à venir en appui sur le diaphragme du mécanisme d'embrayage,
  • un ressort de précharge, précontraint entre l'embase et le piston d'actionnement.

- Le jonc annulaire est maintenu en contact simultanément sur la zone d'interface et la surface d'interface par l'intermédiaire du ressort de précharge de la commande d'embrayage.

Ce dispositif pour embrayage, selon l'invention, présente l'avantage, d'atténuer la transmission des mouvements axiaux générés par la flexion du couvercle dans la commande d'embrayage grâce à l'utilisation d'un jonc annulaire reposant sur une zone d'interface et une surface d'interface complémentaires. Les surfaces toriques et tronconiques autorisent un mouvement de rotule du support par rapport au couvercle. On autorise également un désalignement axial entre l'axe de rotation de la butée d'actionnement et l'axe de rotation du mécanisme d'embrayage grâce à la mise en biais possible du jonc sur la surface d'interface tronconique. On améliore ainsi le centrage d'appui de la butée d'actionnement sur les doigts du diaphragme.
Selon un mode de mise en oeuvre avantageux de l'invention, le support de commande d'embrayage est disposé autour du couvercle de mécanisme d'embrayage. Un tel dispositif pour embrayage peut présenter une ou plusieurs des autres caractéristiques suivantes :

- Le jonc annulaire est normalement ouvert.
- Le premier état de déformation et le deuxième état de déformation correspondent à une réduction du diamètre extérieur du jonc annulaire par rapport à sa forme à l'état libre et le diamètre extérieur du premier état de déformation est inférieur au diamètre extérieur du deuxième état de déformation.

- La déformation du jonc annulaire correspond à une compression du diamètre extérieur dudit jonc annulaire.

- La gorge circonférentielle débouche dans la surface externe de la paroi cylindrique du couvercle et le rebord circonférentiel est implanté sur la surface interne de la paroi du support de commande d'embrayage.

- Le support présente un diamètre minimal de passage DSmin mesuré sur le rebord circonférentiel perpendiculairement à l'axe du dispositif, le couvercle présente un diamètre maximal de fond de gorge DCmax, le jonc présente un diamètre maximal de fil DJmax et la somme du diamètre maximal de fond de gorge DCmax avec le double du diamètre maximal de fil DJmax est strictement inférieure au diamètre minimal de passage DSmin tel que

$$DCmax + 2xDJmax < DSmin.$$

- La surface chanfreinée du rebord présente un angle compris entre 5 et 60 degrés par rapport à la portion cylindrique du support, de préférence entre 15 et 45 degrés.
- En variante, la surface chanfreinée du rebord présente un bombé.
- Le jonc annulaire normalement ouvert est logé dans une gorge intérieure de la rondelle de stockage lorsque le dispositif n'est pas assemblé.
- Le jonc annulaire normalement ouvert est monté sous précontrainte dans la gorge intérieure de la rondelle de stockage.
- Le jonc annulaire normalement ouvert présente un diamètre extérieur à l'état libre supérieur au diamètre de la portion cylindrique du support de commande d'embrayage.
- La rondelle de stockage présente un plan incliné destiné à coopérer avec la surface chanfreinée du support lors de l'opération d'assemblage de la commande d'embrayage sur le mécanisme d'embrayage.
- La rondelle de stockage est logée à l'extérieur de la paroi du couvercle.
- De préférence, la rondelle de stockage est en matériau de type acier.
- La rondelle de stockage en acier est indéformable.
- En variante, la rondelle de stockage est en matière plastique.
- La rondelle de stockage présente un alésage de passage, le diamètre de l'alésage de passage est inférieur au diamètre externe de la paroi du couvercle.
- La rondelle de stockage, en matière plastique, présente une élasticité radiale suffisante pour permettre son emmanchement sur la paroi du couvercle et permettre également un coulissement de la dite rondelle de stockage le long de la paroi du couvercle.
- Le diamètre de la gorge intérieure de la rondelle de stockage est inférieur au diamètre extérieur du jonc annulaire lorsque le jonc est à l'état libre.

Selon un autre mode de mise en oeuvre avantageux de l'invention, le couvercle de mécanisme d'embrayage est disposé autour du support de commande d'embrayage. Un tel dispositif pour embrayage peut présenter une ou plusieurs des autres caractéristiques suivantes :

- Le jonc annulaire est normalement fermé.

- Le premier état de déformation et le deuxième état de déformation correspondent à une augmentation du diamètre extérieur du jonc annulaire par rapport à sa forme à l'état libre et le diamètre extérieur du premier état de déformation est supérieur au diamètre extérieur du deuxième état de déformation.
- La déformation du jonc annulaire correspond à une extension du diamètre extérieur dudit jonc annulaire.
- La gorge circonférentielle débouche dans la surface interne de la paroi cylindrique du couvercle et le rebord circonférentiel est implanté sur la surface externe de la paroi du support de commande d'embrayage
- Le support présente un diamètre maximal de passage DSmax mesuré sur le rebord circonférentiel perpendiculairement à l'axe du dispositif, le couvercle présente un diamètre minimal de fond de gorge DCmin, le jonc présente un diamètre maximal de fil DJmax et la soustraction du diamètre minimal de fond de gorge DCmin avec le double du diamètre maximal de fil DJmax est strictement supérieure au diamètre maximal de passage DSmax tel que

$$DCmin - 2xDJmax > DSmax.$$

- La surface chanfreinée du rebord présente un angle compris entre 5 et 60 degrés par rapport à la portion cylindrique du support, de préférence entre 15 et 45 degrés.
- En variante, la surface chanfreinée du rebord présente un bombé.
- La rondelle de stockage présente un diamètre de passage externe, le diamètre de passage est supérieur au diamètre interne de la paroi du couvercle.
- Le jonc annulaire normalement fermé est logé dans une gorge extérieure de la rondelle de stockage lorsque le dispositif n'est pas assemblé.
- Le jonc annulaire normalement fermé est monté sous précontrainte dans la gorge extérieure de la rondelle de stockage.
- La rondelle de stockage est logée à l'intérieur de la paroi du couvercle.
- De préférence, la rondelle de stockage est en matière plastique.
- La rondelle de stockage présente un diamètre extérieur, ledit diamètre extérieur est supérieur au diamètre interne de la paroi du couvercle.
- La rondelle de stockage, en matière plastique, présente une compressibilité radiale suffisante pour permettre son emmanchement sur la paroi du couvercle et permettre également un coulissement de la dite rondelle de stockage le long de la paroi du couvercle.
- Le diamètre de la gorge extérieure de la rondelle de stockage est supérieur au diamètre intérieur du jonc annulaire lorsque le jonc est à l'état libre.

Selon un autre mode de mise en oeuvre avantageux de l'invention, un tel dispositif pour embrayage peut présenter une ou plusieurs des autres caractéristiques suivantes :

-   La paroi du support est cylindrique et le support comporte une gorge circonférentielle qui débouche dans la paroi cylindrique.
-   La gorge du support comporte une surface d'interface avec ledit jonc annulaire, ladite surface d'interface présentant une forme tronconique.
-   La paroi du couvercle comporte une portion cylindrique et un rebord circonférentiel faisant saillie sur la portion cylindrique.
-   Le rebord circonférentiel comporte une zone d'interface avec ledit jonc annulaire, ladite zone d'interface présentant un rayon de courbure qui épouse la géométrie du jonc annulaire.
-   Le jonc annulaire est logé axialement dans la gorge circonférentielle du support.
-   Le rebord comporte une surface chanfreinée destinée à coopérer avec le jonc annulaire lors de l'opération d'assemblage et la surface chanfreinée s'étend axialement jusqu'à une extrémité axiale de la paroi du couvercle de mécanisme d'embrayage.
-   Le support supporte sur sa paroi cylindrique une rondelle de stockage destinée à maintenir en position le jonc annulaire lors de l'opération d'assemblage de la commande d'embrayage sur le mécanisme d'embrayage.
-   La rondelle de stockage est en matière plastique.

L'invention a également pour objet, selon un autre de ses aspects, un dispositif pour embrayage pour véhicule automobile comprenant :

-   un couvercle de mécanisme d'embrayage,
-   un support de commande d'embrayage,
-   un jonc annulaire discontinu,

caractérisé en ce que le couvercle comporte une paroi venant en regard avec une paroi du support et en ce que les parois et le jonc annulaire sont en coopération de forme de manière à permettre la transmission d'un effort selon l'axe de rotation du mécanisme d'embrayage dans le sens où le support s'éloigne du couvercle, une fois le support assemblé sur le couvercle.

Tout ou partie des caractéristiques mentionnées précédemment s'applique à cet autre aspect de l'invention.

L'invention concerne également un dispositif de transmission de couple, notamment pour un véhicule automobile, comportant au moins :

-   un mécanisme d'embrayage comprenant un diaphragme,
-   une commande d'embrayage comprenant :

    -   une embase, servant de tube-guide,
    -   un piston d'actionnement mobile axialement par rapport à l'embase,
    -   une butée d'actionnement fixée axialement sur le piston d'actionnement, destinée à venir en appui sur le diaphragme du mécanisme d'embrayage,
    -   un ressort de précharge, précontraint entre l'embase et le piston d'actionnement,

lequel dispositif de transmission de couple comporte le dispositif pour embrayage selon l'invention et caractérisé en ce que le jonc annulaire est maintenu en contact simultanément sur le couvercle et le support par l'intermédiaire du ressort de précharge de la commande d'embrayage.

## BREVE DESCRIPTION DES FIGURES

D'autres caractéristiques et avantages de l'invention ressortiront à la lecture de la description qui va suivre, en référence aux figures annexées et détaillées ci-après :

-   La figure 1 représente une vue d'ensemble avec un écorché partiel du dispositif pour embrayage après assemblage de la commande d'embrayage sur le mécanisme d'embrayage selon un premier mode de réalisation de l'invention.
-   La figure 2 représente une vue en coupe du dispositif pour embrayage de la figure 1.
-   La figure 3 représente une vue de détail de la coupe du dispositif pour embrayage de la figure 2.
-   La figure 4 représente une vue en coupe avant assemblage du mécanisme d'embrayage selon un premier mode de réalisation de l'invention.
-   La figure 5 représente une vue de détail de la coupe du dispositif pour embrayage selon un deuxième mode de réalisation de l'invention, proche du premier mode.
-   La figure 6 représente une vue en coupe du dispositif pour embrayage après assemblage de la commande d'embrayage sur le mécanisme d'embrayage selon un troisième mode de réalisation de l'invention.
-   La figure 7 représente une vue de détail de la coupe du dispositif pour embrayage de la figure 6.

Pour plus de clarté, les éléments identiques ou similaires sont repérés par des signes de référence identiques sur l'ensemble des figures.

Naturellement, les modes de réalisation illustrés par les figures présentées ci-dessus ne sont donnés qu'à titre d'exemples non limitatif. Il est explicitement prévu que l'on puisse associer entre eux ces différents modes pour les combiner.

Dans la suite de la description et les revendications, on utilisera à titre non limitatif et afin d'en faciliter la compréhension, les termes « avant » ou « arrière » selon la direction par rapport à une orientation axiale déterminée par l'axe X principal de rotation de la transmission du véhicule automobile identique à celui du dispositif pour embrayage et les termes « intérieur / interne» ou « extérieur / externe » par rapport à l'axe X et suivant une orientation radiale, orthogonale à ladite orientation axiale.

## DESCRIPTION DÉTAILLÉE DE MODES DE REALISATION

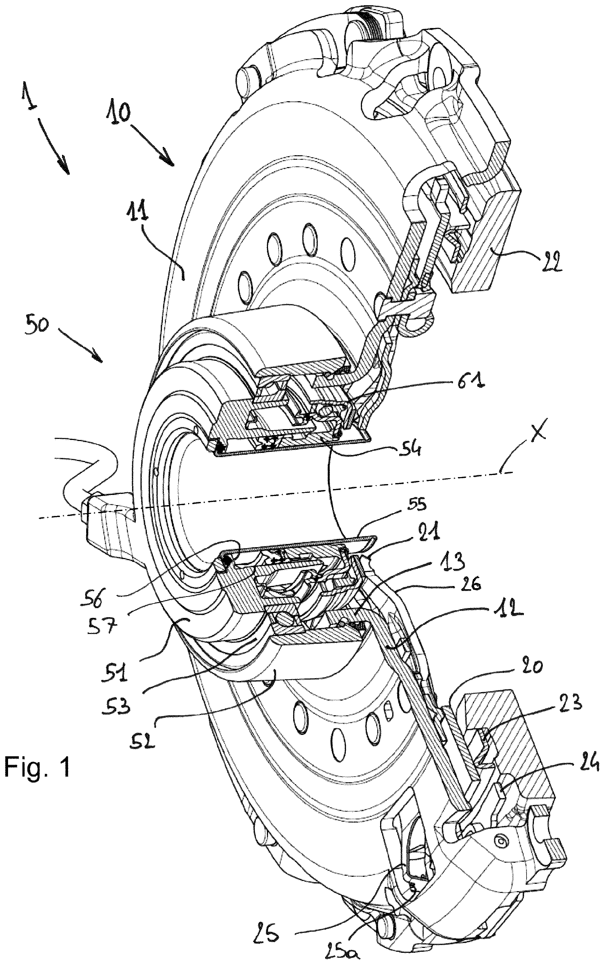

La figure 1 représente un dispositif de transmission de couple 1 notamment pour un véhicule automobile, comprenant un mécanisme d'embrayage 10 et une commande d'embrayage 50.

Le mécanisme d'embrayage 10 comporte un couvercle 11 en forme générale de cloche, délimitant un volume interne et destiné à être relié en rotation avec un volant moteur (non représenté) du véhicule automobile, à l'aide de moyens bien connus de l'homme du métier. Le couvercle 11 comporte un fond annulaire 12 s'étendant sensiblement radialement, prolongée à son bord périphérique interne par une paroi 13 s'étendant axialement à l'opposé du volume interne défini par le couvercle. La paroi 13 est par exemple cylindrique.

Un diaphragme annulaire 20, déformable élastiquement, est logé dans le couvercle 11. Le diaphragme 20 coopère avec un plateau de pression 22 logé dans le couvercle 11 et solidaire en rotation de ce dernier. Le diaphragme 20 est muni de doigts 21 s'étendant radialement vers l'intérieur. Chaque doigt comporte une partie cambrée 26 apte à être logée, au moins en partie, dans l'espace délimité par la paroi 13 cylindrique du couvercle 11.

Lorsque le diaphragme 20 est au repos, il exerce un effort sur le plateau de pression 22, de façon à enserrer un disque de friction (non représenté) entre ce plateau de pression 22 et le volant moteur, couplant ainsi le disque de friction avec le mécanisme d'embrayage 10. Le disque de friction comporte un support annulaire de part et d'autre duquel est montée une garniture de friction.

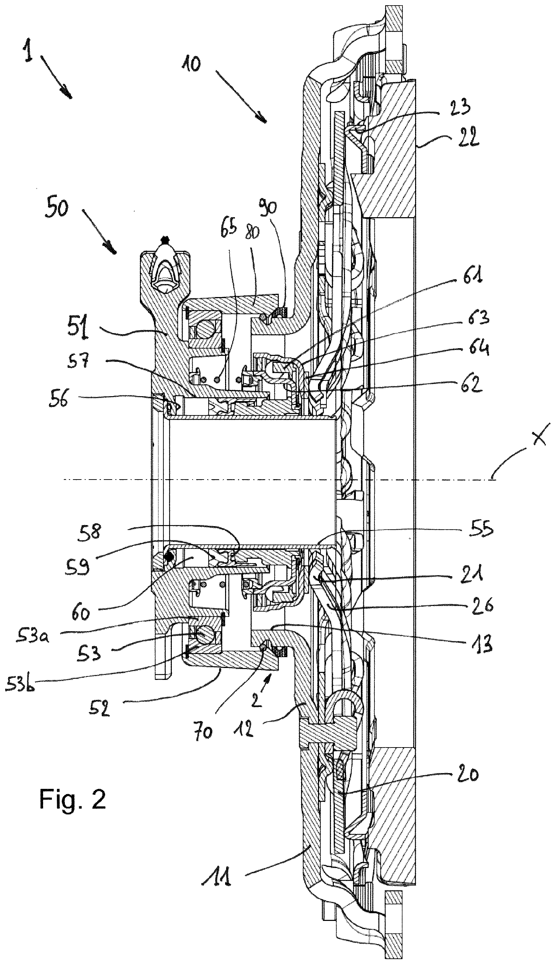

Comme illustré sur les figures 1 et 2, la commande d'embrayage 50 comporte une embase 51 et un piston d'actionnement 54 mobile axialement par rapport à l'embase 51. Le piston d'actionnement 54 forme avec l'embase 51 un vérin pneumatique, ou hydraulique de la commande d'embrayage 50. Lorsque le piston d'actionnement 54 est actionné, il exerce un effort axial sur les doigts 21 du diaphragme 20, ce qui provoque la déformation élastique du diaphragme. Le diaphragme 20 pivote alors de façon à relâcher le plateau de pression 22, libérant ainsi un disque de friction en position débrayée (non représenté).

De manière non limitative, le mécanisme d'embrayage peut être équipé de moyens de rattrapage d'usure interposés entre un plateau de pression 22 et le diaphragme 20. Comme illustré sur les figures 1 et 2, les moyens de rattrapage d'usure comportent un anneau 23 à rampes circonférentielles qui coopèrent avec des contre-rampes complémentaires (non illustrées) du plateau de pression 22. L'anneau à rampes 23 sert également à l'appui du diaphragme 20 de sorte que la rotation de l'anneau 23 par rapport au plateau de pression 22 entraîne le déplacement des rampes par rapport aux contre-rampes et, ainsi, le déplacement axial du plateau de pression 22 par rapport au diaphragme 20, au couvercle 11 et au volant moteur. On fait ainsi varier la distance entre le plateau de pression 22 et le volant moteur associé, de manière à compenser l'usure de la garniture de friction du disque de friction.

Un organe denté 24 est fixé sur l'anneau à rampes 23 et engrène avec une vis sans fin (non représentée) montée dans un support (non représenté) fixé au couvercle 11, l'organe denté 24 étant au droit de la vis sans fin.

Comme cela est visible à la figure 1, un cliquet d'actionnement 25 est fixé sur le fond annulaire 12 à l'intérieur du couvercle de mécanisme d'embrayage et coopère avec la vis sans fin par l'intermédiaire d'une roue à rochet solidaire de la vis sans fin. Le cliquet d'actionnement 25 se présente sous la forme d'une lamelle élastique présentant une languette de commande (non représentée) coopérant avec les dents de la roue à rochet de façon à autoriser la rotation de la roue à rochet en cas d'usure. Le cliquet 25 comporte en outre des butées de contrôle 25a destinées à venir en appui sur le couvercle 11 fixe par rapport au volant moteur, lorsque le diaphragme 20 est en position embrayé, comme illustré sur la figure 1.

De cette manière, en cas d'usure et lors des actionnements successifs du diaphragme 20, le cliquet 25 entraîne la rotation de la roue à rochet et de la vis sans fin, cette dernière entraînant la rotation de l'anneau 23 portant les rampes, par l'intermédiaire de l'organe denté 24. On augmente ainsi progressivement la distance entre le plateau de pression 22 et le couvercle 11 et on diminue progressivement la distance entre le plateau de pression 22 et le volant moteur associé, de façon à compenser l'usure.

L'embase 51 de la commande d'embrayage comprend un tube-guide 55 rapporté sur lequel le piston d'actionnement 54 mobile axialement peut coulisser. Le tube-guide 55 a une forme cylindrique. Alternativement, le tube-guide 55 pourrait être issu de matière avec l'embase. L'embase comprend également un fond 56 et une collerette cylindrique 57 concentrique au tube-guide 55 qui s'étend axialement dans la même direction que le tube-guide. Le fond 56, la collerette cylindrique 57 et le tube-guide 55 forment un récipient ouvert. Le piston d'actionnement 54 de forme globalement cylindrique comprend une face arrière 58 sur laquelle est rapporté un joint d'étanchéité 59.

La face arrière 58 globalement radiale du piston d'actionnement 54 délimite, avec le fond 56, la collerette cylindrique 57 et le tube-guide 55, une chambre de commande 60 susceptible d'être alimentée en gaz ou en fluide sous pression, provenant d'une source de gaz ou de fluide sous pression (non représentée), en vue de commander le coulissement axial du piston d'actionnement 54.

Une butée d'actionnement 61 est montée sur l'extrémité axiale avant du piston d'actionnement 54. La butée d'actionnement 61 est fixée axialement sur le piston d'actionnement. Le piston d'actionnement 54 comporte, à l'avant, un tronçon tubulaire prévu pour recevoir la butée d'actionnement 61 de manière complémentaire. La butée d'actionnement 61 comporte une bague interne 62 et une bague externe 63 entre lesquelles sont agencées des billes. La bague externe 63 s'étend ici axialement vers l'avant, au-delà de la bague interne 62. La bague externe 63 est pourvue, à son extrémité axiale avant, d'une collerette d'appui 64 qui s'étend radialement vers l'intérieur. La collerette d'appui 64 est ici rapportée sur la bague externe. La collerette d'appui 64 peut également être issue de matière avec la bague externe 63, par exemple par moulage, ou emboutissage. La collerette d'appui 64 forme une surface d'appui qui est prévue pour venir en contact et en appui axial contre les doigts 21 du diaphragme 20.

La commande d'embrayage 50 comprend également un ressort de précharge 65 disposé axialement entre l'embase 51 et le piston d'actionnement 54. Le ressort de précharge 65, ici représenté sous la forme d'un ressort hélicoïdal, est assemblé avec précontrainte entre l'embase 51 et le piston d'actionnement 54 de manière à créer un effort de précharge de la butée d'actionnement 61 sur les doigts 21 du diaphragme 20.

La commande d'embrayage 50 comprend également un palier à roulements 53 et un support 52 de commande d'embrayage 50. Le support 52 est monté à rotation sur l'embase 51 par l'intermédiaire du palier à roulements 53. Le palier à roulements 53 est un roulement à billes comprenant des bagues de roulement intérieure et extérieure 53a; 53b massives, usinées dans la masse. Alternativement, les bagues de roulement intérieure et extérieure 53a; 53b peuvent être réalisées en tôle. De manière non limitative, ce palier à roulements pourrait être remplacé par un roulement à aiguilles ou encore un palier lisse. Le palier à roulements 53 reprend les efforts axiaux générés par la commande d'embrayage et permet la rotation du mécanisme d'embrayage 10 par rapport à l'embase 51 de la commande d'embrayage 50.

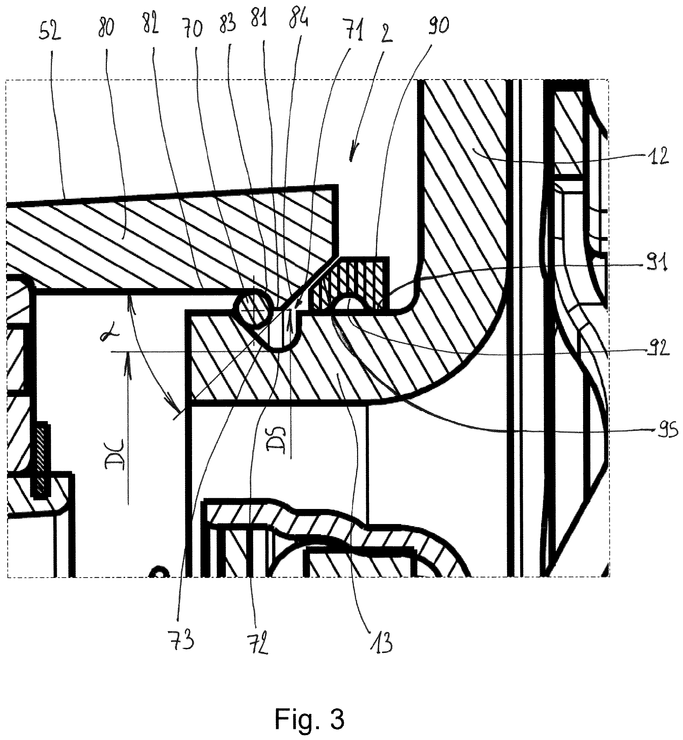

On va maintenant décrire en référence aux figures 1 à 4, un dispositif pour embrayage 2 selon un premier mode de réalisation de l'invention. Le dispositif pour embrayage 2 comprend :

- le couvercle 11 de mécanisme d'embrayage,
- le support 52 de commande d'embrayage, et
- un jonc annulaire 70 de fixation du couvercle et du support.

Le couvercle 11 comporte une paroi 13 cylindrique en regard d'une paroi 80 cylindrique du support 52. Lesdites parois 13 et 80 sont disposées radialement et axialement en regard et définissent un passage 71 pour le jonc annulaire 70 lors l'assemblage du support 52 sur le couvercle 11. Le passage 71 est donc un espace aménagé entre les parois 13 et 80 de couvercle 11 et de support 52 de telle sorte que le passage 71 présente une première portion dans laquelle le jonc 70 présente un premier état de déformation par rapport à sa forme à l'état libre, et une deuxième portion dans laquelle le jonc 70 se détend de manière à présenter un deuxième état de déformation une fois le support 52 assemblé sur le couvercle 11. Dans le cas présent, la déformation du jonc annulaire 70 correspond à une compression du diamètre extérieur dudit jonc annulaire 70.

Le jonc annulaire 70 présente en section, dans un plan qui contient l'axe du dispositif X, un profil circulaire. Le jonc annulaire 70 est réalisé à partir d'un fil d'acier de diamètre DJ. Le jonc annulaire 70 est ici discontinu et normalement ouvert. Par normalement ouvert, on entend que le jonc annulaire 70 présente un diamètre extérieur à l'état libre qui est supérieur aux diamètres correspondants aux premier et deuxième états de déformation mentionnés précédemment de manière à ce que le jonc annulaire 70 soit toujours précontraint sur sa circonférence une fois le support 52 assemblé sur le couvercle 11.

La paroi 13 du couvercle 11 est cylindrique et le couvercle 11 comporte une gorge 72 circonférentielle qui débouche dans la surface externe de la paroi 13 cylindrique. La gorge 72 du couvercle 11 comporte également une surface d'interface 73 avec le jonc annulaire 70. Cette surface d'interface 73 est de forme tronconique. Le couvercle 11 présente un diamètre de fond de gorge DC.

La paroi 80 du support 52 comporte une portion cylindrique 82 et un rebord 81 circonférentiel faisant saillie par rapport à la portion cylindrique 82. Le rebord 81 circonférentiel est implanté sur la surface interne de la paroi 80 du support 52 de commande d'embrayage. Le rebord 81 circonférentiel comporte également une zone d'interface 83 avec le jonc annulaire 70. Cette zone d'interface 83 présente une forme torique. La zone d'interface 83 présente un rayon de courbure sensiblement équivalent au rayon du fil utilisé pour réaliser le jonc annulaire 70. La surface d'interface 83 épouse la géométrie du jonc annulaire 70. On augmente la surface de portée du jonc annulaire 70 en réduisant ainsi les pressions de contact et les risques d'usure associés. Le support 52 présente un diamètre de passage DS mesuré sur le rebord 81 circonférentiel perpendiculairement à l'axe du dispositif X.

Le rebord 81 comporte également une surface chanfreinée 84 destinée à coopérer avec le jonc annulaire 70 lors de l'opération d'assemblage. La surface chanfreinée 84 s'étend axialement jusqu'à une extrémité axiale de la paroi 80 du support 52 de commande d'embrayage 50. La surface chanfreinée 84 du rebord 81 présente un angle α d'une valeur proche de 45° par rapport à la portion cylindrique du support 52. Cependant, la valeur de cet angle α peut varier et être compris entre 5 et 60 degrés suivant les applications.

Comme illustré sur les figures 1 à 4, le dispositif pour embrayage 2 comprend également une rondelle de stockage 90 logée sur l'extérieur de la paroi 13 cylindrique du couvercle 11. La rondelle de stockage 90 a pour fonction de maintenir en position le jonc annulaire 70 lors de l'opération d'assemblage de la commande d'embrayage 50 sur le mécanisme d'embrayage 10. La rondelle de stockage 90 présente la forme d'un anneau et comprend un alésage de passage 91 et une gorge intérieure 92.

La rondelle de stockage 90 est ici en matière plastique et le diamètre de l'alésage de passage 91 est inférieur au diamètre externe de la paroi 13 du couvercle 11. La rondelle de stockage 90 présente une élasticité radiale suffisante pour permettre son emmanchement sur la paroi du couvercle et permettre également son coulissement le long de la paroi 13 du couvercle 11. La rondelle de stockage 90 présente également un plan incliné 95 destiné à coopérer avec la surface chanfreinée 84 du support 52 lors de l'opération d'assemblage de la commande d'embrayage 50 sur le mécanisme d'embrayage 10.

De manière non limitative, la matière de la rondelle de stockage 90 pourrait être remplacée par un matériau de type acier. La rondelle de stockage 90 serait alors indéformable. Dans ce cas de figure, le diamètre de l'alésage de passage 91 serait supérieur au diamètre externe de la paroi 13 du couvercle 11de manière à permettre son coulissement le long de la paroi du couvercle 11.

On va maintenant décrire l'assemblage du support sur le couvercle suivant le premier mode de réalisation de l'invention. Cet assemblage se fait en quatre étapes distinctes :

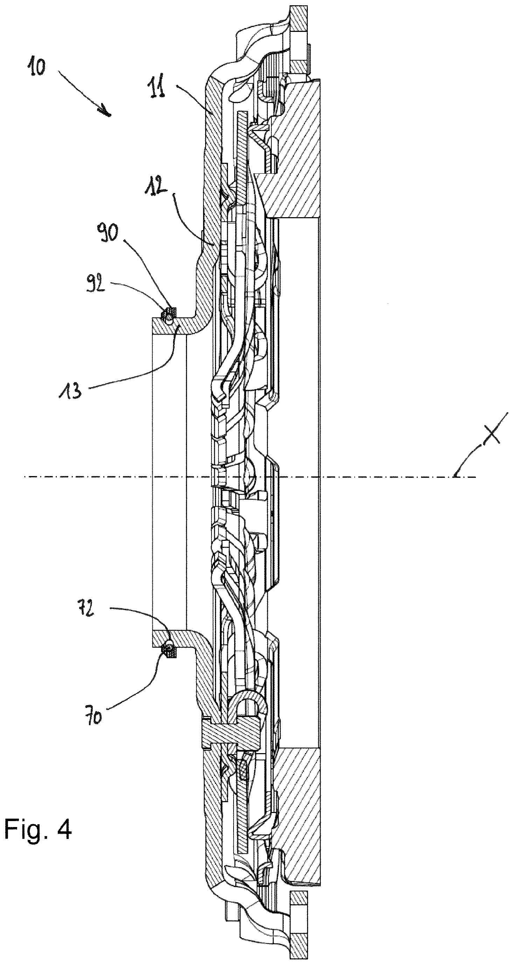

Selon une première étape, comme illustrée sur la figure 4, la commande d'embrayage 50 est détachée du mécanisme d'embrayage 10. Le jonc annulaire 70 et la rondelle de stockage 90 en matière plastique forment un sous-ensemble porté par le couvercle 11. Le jonc annulaire 70 est logé dans la gorge intérieure 92 de la rondelle de stockage.

Selon une deuxième étape (non représentée), la commande d'embrayage 50 est présentée face au mécanisme d'embrayage 10 de manière à disposer les parois 13 et 80 de couvercle 11 et de support 52 radialement et axialement en regard. Le couvercle 11 et le support 52 sont sensiblement coaxiaux. Un effort est exercé suivant l'axe X sur la commande d'embrayage 50 de manière à ce que la commande d'embrayage 50 se rapproche du mécanisme d'embrayage 10. La surface chanfreinée 84 du support 52 vient en appui sur le plan incliné 95 de la rondelle de stockage 90. La rondelle de stockage 90 coulisse axialement le long de la paroi 13 cylindrique du couvercle 11. Le jonc annulaire 70 est retenu axialement dans la gorge 72 du couvercle 11. Le jonc annulaire 70 est amené dans un premier état de déformation par rapport à sa forme à l'état libre sous l'action de la surface chanfreinée 84 du support 52. Le jonc annulaire 70 emprunte la première portion du passage 71 dans laquelle le diamètre extérieur du jonc annulaire 70 se réduit par rapport à sa forme à l'état libre. Le premier état de déformation est atteint lorsque le jonc annulaire 70 est inscrit dans le diamètre de passage DS du support 52.

Selon une troisième étape (non représentée), la commande d'embrayage 50 est sur le point d'être assemblée sur le mécanisme d'embrayage 10. Un effort est toujours exercé suivant l'axe X sur la commande d'embrayage 50 de manière à ce que la commande d'embrayage 50 se rapproche du mécanisme d'embrayage. Le jonc annulaire 70 est amené dans un deuxième état de déformation par rapport à sa forme à l'état libre sous l'action de la zone d'interface 83 du support 52. Le jonc annulaire emprunte la deuxième portion du passage 71 dans laquelle le jonc annulaire 70 se détend de manière à présenter un deuxième état de déformation. Le deuxième état de déformation est atteint lorsque le jonc annulaire est inscrit dans la portion cylindrique 82 du support 52. Le diamètre extérieur du premier état de déformation est inférieur au diamètre extérieur du deuxième état de déformation.

Selon une quatrième étape, comme illustrée sur les figures 1, 2 et 3, la commande d'embrayage 50 est assemblée sur le mécanisme d'embrayage 10. La surface d'interface 73, la zone d'interface 83 et le jonc annulaire 70 sont en coopération de forme de manière à permettre la transmission d'un effort selon l'axe du dispositif X dans le sens où le support s'éloigne du couvercle, une fois le support assemblé sur le couvercle. Le jonc annulaire 70 est maintenu en contact simultanément sur le couvercle 11 et le support 52 par l'intermédiaire du ressort de précharge 65 de la commande d'embrayage 50. Le ressort de précharge 65 exerce un effort axial qui tend à éloigner le support 52 du couvercle 11. Après assemblage, la rondelle de stockage 90 n'est plus en contact avec le support 52.

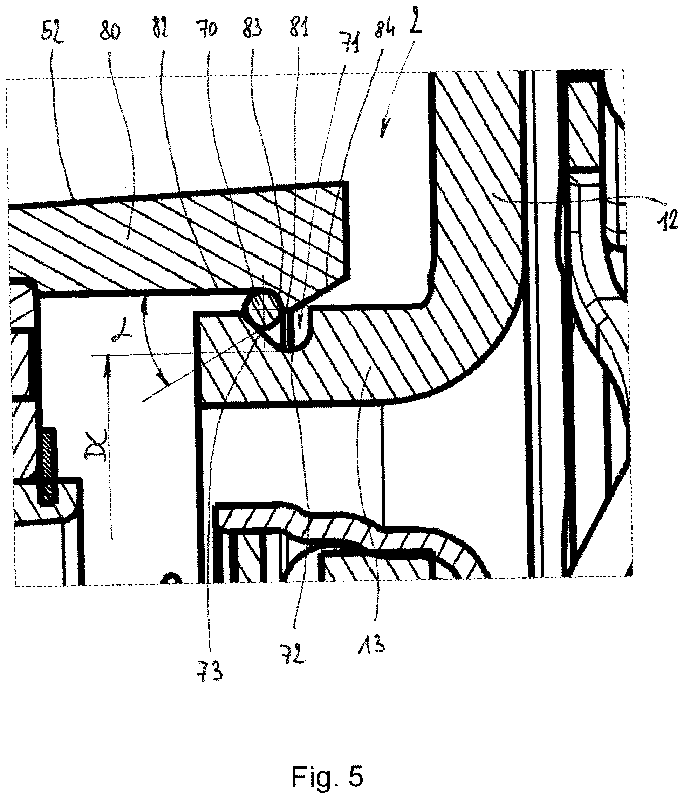

On a décrit sur la figure 5, un deuxième mode de réalisation de l'invention sensiblement similaire au précédent à l'exception du fait que le dispositif pour embrayage 2 ne comporte pas de rondelle de stockage.

Avant assemblage du support 52 sur le couvercle 11, le jonc annulaire 70 est maintenu dans la gorge 72 du couvercle 11 à l'état libre. Cependant, comme le diamètre intérieur du jonc annulaire 70 à l'état libre est inférieur au diamètre extérieur de la paroi 13 du couvercle 11, celui-ci ne peux pas sortir de la gorge 72 du couvercle 11. Lors de l'assemblage de la commande d'embrayage 50 sur le mécanisme d'embrayage 10, le jonc annulaire 70 est amené dans un premier état de déformation par rapport à sa forme à l'état libre sous l'action uniquement de la surface chanfreinée 84 du support 52. L'angle α de la surface chanfreinée 84 présente dans ce mode de réalisation une valeur proche de 30° par rapport à la portion cylindrique 82 du support 52.

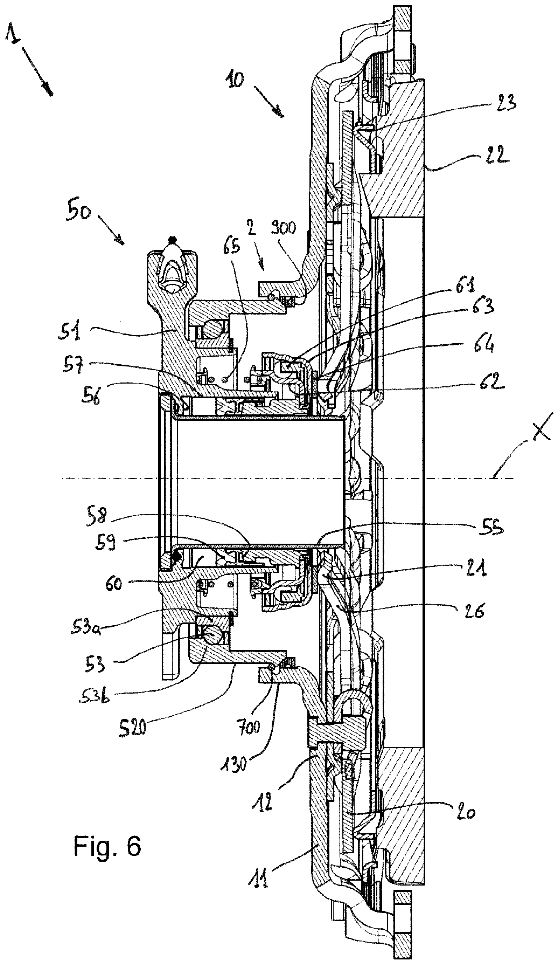

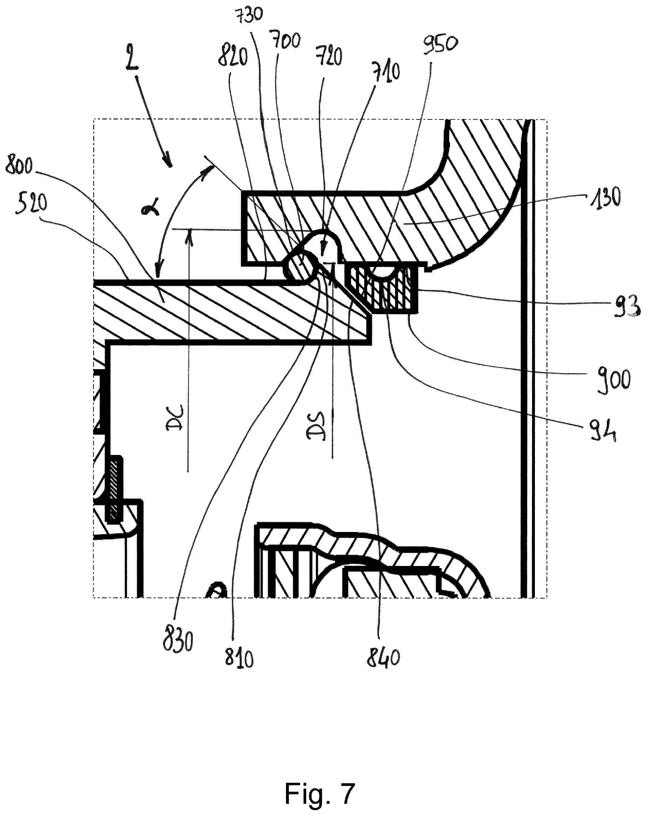

On a décrit sur les figures 6 et 7, un troisième mode de réalisation de l'invention sensiblement similaire au premier mode de réalisation à l'exception du fait que le support est logé à l'intérieur de la paroi du couvercle 11.

Dans ce mode de réalisation, la commande d'embrayage 50 comprend un support 520 de commande d'embrayage 50, monté à rotation sur l'embase 51 par l'intermédiaire du palier à roulements 53 dans lequel le support 520 fait partie intégrante du palier à roulements 53. La bague de roulement extérieure 53b comporte une piste de roulement conformée directement dans le support 520.

On va maintenant décrire en référence aux figures 6 à 7, le dispositif pour embrayage 2 selon le troisième mode de réalisation de l'invention. Le dispositif pour embrayage 2 comprend :

- le couvercle 11 de mécanisme d'embrayage 10,
- le support 520 de commande d'embrayage 50, et
- un jonc annulaire 700 de fixation du couvercle et du support.

Le couvercle comporte une paroi 130 cylindrique en regard d'une paroi 800 cylindrique du support 520. Lesdites parois 130 et 800 sont disposées radialement et axialement en regard et définissent un passage 710 pour le jonc annulaire 700 lors l'assemblage du support 520 sur le couvercle 11. Le passage 710 est donc un espace aménagé entre les parois 130 et 800 de couvercle 11 et de support 520 de telle sorte que le passage 710 présente une première portion dans laquelle le jonc 700 présente un premier état de déformation par rapport à sa forme à l'état libre, et une deuxième portion dans laquelle le jonc 700 se détend de manière à présenter un deuxième état de déformation une fois le support 520 assemblé sur le couvercle 11. Dans le cas présent, la déformation du jonc annulaire 700 correspond à une extension du diamètre extérieur dudit jonc annulaire 700.

Le jonc annulaire 700 présente en section, dans un plan qui contient l'axe du dispositif X, un profil circulaire. Le jonc annulaire 700 est réalisé à partir d'un fil d'acier de diamètre DJ. Le jonc annulaire 700 est ici discontinu et normalement fermé. Par normalement fermé, on entend que le jonc annulaire 700 présente un diamètre extérieur à l'état libre qui est inférieur aux diamètres correspondants aux premier et deuxième états de déformation mentionnés précédemment de manière à ce que le jonc annulaire 700 soit toujours précontraint sur son diamètre intérieur une fois le support 520 assemblé sur le couvercle 11.

La paroi 130 du couvercle est cylindrique et le couvercle 11 comporte une gorge 720 circonférentielle qui débouche dans la surface interne de la paroi 130 cylindrique. La gorge 720 du couvercle 11 comporte également une surface d'interface 730 avec le jonc annulaire 700. Cette surface d'interface 730 est de forme tronconique. Le couvercle 11 présente un diamètre de fond de gorge DC.

La paroi 800 du support comporte une portion cylindrique 820 et un rebord 810 circonférentiel faisant saillie par rapport à la portion cylindrique 820. Le rebord 810 circonférentiel est implanté sur la surface externe de la paroi 800 du support 520 de commande d'embrayage. Le rebord 810 circonférentiel comporte également une zone d'interface 830 avec le jonc annulaire. Cette zone d'interface 830 présente une forme torique. Le support 520 présente un diamètre de passage DS externe mesuré sur le rebord 810 circonférentiel perpendiculairement à l'axe du dispositif X.

Le rebord 810 comporte également une surface chanfreinée 840 destinée à coopérer avec le jonc annulaire 700 lors de l'opération d'assemblage.

Comme illustré sur les figures 6 à 7, le dispositif pour embrayage 2 comprend également une rondelle de stockage 900 logée à l'intérieur de la paroi 130 cylindrique du couvercle 11. La rondelle de stockage 900 a pour fonction de maintenir en position le jonc annulaire 700 lors de l'opération d'assemblage de la commande d'embrayage 50 sur le mécanisme d'embrayage 10. La rondelle de stockage 900 présente la forme d'un anneau et comprend un diamètre de passage 93 et une gorge extérieure 94.

La rondelle de stockage 900 est ici en matière plastique et le diamètre de passage 93 est supérieur au diamètre interne de la paroi 130 du couvercle 11. La rondelle de stockage 900 présente une compressibilité radiale suffisante pour permettre son emmanchement sur la paroi 130 du couvercle 11 et permettre également son coulissement le long de la paroi 130 du couvercle 11. La rondelle de stockage 900 présente également un plan incliné 950 destiné à coopérer avec la surface chanfreinée 840 du support 520 lors de l'opération d'assemblage de la commande d'embrayage 50 sur le mécanisme d'embrayage 10.

On va maintenant décrire l'assemblage du support sur le couvercle suivant le troisième mode de réalisation de l'invention. Cet assemblage se fait en quatre étapes distinctes :

Selon une première étape (non représentée), la commande d'embrayage 50 est détachée du mécanisme d'embrayage 10. Le jonc annulaire 700 et la rondelle de stockage 900 en matière plastique forment un sous-ensemble porté par le couvercle 11. Le jonc annulaire 700 est logé dans la gorge extérieure 94 de la rondelle de stockage 900.

Selon une deuxième étape (non représentée), la commande d'embrayage 50 est présentée face au mécanisme d'embrayage 10 de manière à disposer les parois 130 et 800 de couvercle et de support radialement et axialement en regard. Le couvercle 11 et le support 520 sont sensiblement coaxiaux. Un effort est exercé suivant l'axe X sur la commande d'embrayage 50 de manière à ce que la commande d'embrayage 50 se rapproche du mécanisme d'embrayage 10. La surface chanfreinée 840 du support 520 vient en appui sur le plan incliné 950 de la rondelle de stockage 900. La rondelle de stockage 900 coulisse axialement le long de la paroi 130 cylindrique du couvercle 11. Le jonc annulaire 700 est retenu axialement dans la gorge 720 du couvercle 11. Le jonc annulaire 700 est amené dans un premier état de déformation par rapport à sa forme à l'état libre sous l'action de la surface chanfreinée 840 du support 520. Le jonc annulaire 700 emprunte la première portion du passage 710 dans laquelle le diamètre extérieur du jonc annulaire 700 s'étend par rapport à sa forme à l'état libre. Le premier état de déformation est atteint lorsque le jonc annulaire 700 se situe à l'aplomb du diamètre de passage DS du support 520.

Selon une troisième étape (non représentée), la commande d'embrayage 50 est sur le point d'être assemblée sur le mécanisme d'embrayage 10. Un effort est toujours exercé suivant l'axe X sur la commande d'embrayage 50 de manière à ce que la commande d'embrayage 50 se rapproche du mécanisme d'embrayage 10. Le jonc annulaire 700 est amené dans un deuxième état de déformation par rapport à sa forme à l'état libre sous l'action de la zone d'interface 830 du support 520. Le jonc annulaire 700 emprunte la deuxième portion du passage 710 dans laquelle le jonc annulaire 700 se détend de manière à présenter un deuxième état de déformation. Le deuxième état de déformation est atteint lorsque le jonc annulaire 700 est en appui sur la portion cylindrique 820 du support 520. Le diamètre extérieur du premier état de déformation est supérieur au diamètre extérieur du deuxième état de déformation.

Selon une quatrième étape, comme illustrée sur les figures 6 et 7, la commande d'embrayage 50 est assemblée sur le mécanisme d'embrayage 10. La surface d'interface 730, la zone d'interface 830 et le jonc annulaire 700 sont en coopération de forme de manière à permettre la transmission d'un effort selon l'axe du dispositif X dans le sens où le support 520 s'éloigne du couvercle 11, une fois le support 520 assemblé sur le couvercle 11. Le jonc annulaire 700 est maintenu en contact simultanément sur le couvercle 11 et le support 520 par l'intermédiaire du ressort de précharge 65 de la commande d'embrayage 50. Le ressort de précharge 65 exerce un effort axial qui tend à éloigner le support 520 du couvercle 11. Après assemblage, la rondelle de stockage 900 n'est plus en contact avec le support 520.

Selon un autre mode de réalisation de l'invention non représenté, la gorge est réalisée dans le support 52 ou 520 au lieu d'être réalisée dans la paroi 13 ou 130 cylindrique du couvercle 11. De la même manière, le rebord 81 ou 810 cylindrique est réalisé sur la paroi 13 ou 130 du couvercle 11 au lieu d'être réalisé sur le support 52 ou 520.

Tous les modes de réalisation précédemment décrit sont applicables et à adapter à ce dernier mode de réalisation de l'invention. Plus précisément, la paroi du support est cylindrique et le support comporte une gorge circonférentielle qui débouche dans la paroi cylindrique du support. La gorge du support comporte une surface d'interface avec le jonc annulaire. Cette surface d'interface présente une forme tronconique.

En conséquence, la paroi du couvercle comporte une portion cylindrique et un rebord circonférentiel faisant saillie sur la portion cylindrique du couvercle. Le rebord circonférentiel comporte alors une zone d'interface avec le jonc annulaire. Cette zone d'interface présente un rayon de courbure qui épouse la géométrie du jonc annulaire. Le jonc annulaire est logé axialement dans la gorge du support. Le rebord comporte une surface chanfreinée destinée à coopérer avec le jonc annulaire lors de l'opération d'assemblage et la surface chanfreinée s'étend axialement jusqu'à une extrémité axiale de la paroi du couvercle de mécanisme d'embrayage. Le support supporte également sur sa paroi cylindrique une rondelle de stockage destinée à maintenir en position le jonc annulaire lors de l'opération d'assemblage de la commande d'embrayage sur le mécanisme d'embrayage.

Dans tous les exemples ci-dessus, l'invention a été appliquée à un embrayage simple, mais l'invention n'y est pas limitée. Selon un autre mode de réalisation de l'invention, le dispositif pour embrayage est appliqué à un mécanisme à double embrayage. Le mécanisme à double embrayage, destiné à coupler un moteur avec un premier et un second arbre d'entrée d'une boîte de vitesses, comporte des premier et second embrayages de passage de rapports de parités différentes. Le dispositif pour embrayage selon l'invention peut être appliqué indépendamment à l'un ou l'autre des embrayages de passage de rapports pairs ou impairs. Dans ce mode de réalisation, le dispositif pour embrayage comprend un couvercle de mécanisme à double embrayage, un support de commande d'embrayage, et un jonc annulaire de fixation du couvercle et du support. Le couvercle de mécanisme à double embrayage comporte une paroi en regard d'une paroi du support et lesdites parois en regard définissent un passage pour le jonc annulaire lors de l'assemblage du support sur le couvercle. Le fonctionnement d'un tel dispositif est similaire à celui décrit précédemment. Le couvercle peut être celui de l'embrayage de passage de rapports pairs ou celui de l'embrayage de passage de rapports impairs.

**Revendications**

1. Dispositif pour embrayage (2) pour véhicule automobile, comprenant :

    • un couvercle (11) de mécanisme d'embrayage (10),
    • un support (52 ; 520) de commande d'embrayage (50), et
    • un jonc annulaire (70 ; 700) de fixation du couvercle et du support, de façon que le couvercle (11) comporte une paroi (13 ; 130) en regard d'une paroi (80 ; 800) du support (52 ; 520), lesdites parois (13 ; 130 ; 80 ; 800) en regard définissant un passage (71; 710) pour le jonc annulaire lors de l'assemblage du support sur le couvercle, **caractérisé en ce que** ce passage (71 ; 710) présente une première portion dans laquelle le jonc annulaire (70 ; 700) présente un premier état de déformation par rapport à sa forme à l'état libre, et une deuxième portion dans laquelle le jonc annulaire (70 ; 700) se détend de manière à présenter un deuxième état de déformation une fois le support (52 ; 520) assemblé sur le couvercle (11).

2. Dispositif pour embrayage (2) selon la revendication 1, **caractérisé en ce que** la paroi (13 ; 130) du couvercle est cylindrique et le couvercle (11) comporte une gorge (72 ; 720) circonférentielle qui débouche dans la paroi cylindrique (13 ; 130).

3. Dispositif pour embrayage (2) selon la revendication 2, **caractérisé en ce que** la gorge (72 ; 720) du couvercle comporte une surface d'interface (73 ; 730) avec ledit jonc annulaire, ladite surface d'interface présentant une forme tronconique.

4. Dispositif pour embrayage (2) selon la revendication 1, **caractérisé en ce que** la paroi (80 ; 800) du support (52, 520) comporte une portion cylindrique (82 ; 820) et un rebord (81 ; 810) circonférentiel faisant saillie par rapport à la portion cylindrique (82 ; 820).

5. Dispositif pour embrayage (2) selon la revendication 4, **caractérisé en ce que** le rebord (81 ; 810) circonférentiel comporte une zone d'interface (83 ; 830) avec ledit jonc annulaire (70 ; 700), ladite zone d'interface présentant un rayon de courbure qui épouse la géométrie du jonc annulaire.

6. Dispositif pour embrayage (2) selon l'une quelconque des revendications précédentes, **caractérisé en ce que** le couvercle supporte sur sa paroi (13 ; 130) cylindrique une rondelle de stockage (90 ; 900) destinée à maintenir en position le jonc annulaire (70 ; 700) lors de l'opération d'assemblage de la commande d'embrayage (50) sur le mécanisme d'embrayage (10).

7. Dispositif pour embrayage (2) selon l'une quelconque des revendications 1 à 6, **caractérisé en ce que** le jonc annulaire (70) est normalement ouvert.

8. Dispositif pour embrayage (2) selon la revendication 7, **caractérisé en ce que** le premier état de déformation et le deuxième état de déformation correspondent à une réduction du diamètre extérieur du jonc annulaire (70) par rapport à sa forme à l'état libre et **en ce que** le diamètre extérieur du premier état de déformation est inférieur au diamètre extérieur du deuxième état de déformation.

9. Dispositif pour embrayage (2) selon les revendications 2 et 4, **caractérisé en ce que** la gorge (72) circonférentielle débouche dans la surface externe de la paroi (13) cylindrique du couvercle et **en ce que** le rebord (81) circonférentiel est implanté sur la surface interne de la paroi (80) du support de commande d'embrayage.

10. Dispositif pour embrayage (2) selon l'une quelconque des revendications 1 à 6, **caractérisé en ce que** le jonc annulaire (700) est normalement fermé.

11. Dispositif pour embrayage (2) selon la revendication 10, **caractérisé en ce que** le premier état de déformation et le deuxième état de déformation correspondent à une augmentation du diamètre extérieur du jonc annulaire (700) par rapport à sa forme à l'état libre et le diamètre extérieur du premier état de déformation est supérieur au diamètre extérieur du deuxième état de déformation.

12. Dispositif pour embrayage (2) selon les revendications 2 et 4, **caractérisé en ce que** la gorge (720) circonférentielle débouche dans la surface interne de la paroi (130) cylindrique du couvercle et **en ce que** le rebord (810) circonférentiel est implanté sur la surface externe de la paroi (800) du support (520) de commande d'embrayage (50)

13. Dispositif pour embrayage (2) selon l'une quelconque des revendications 1 à 12, **caractérisé en ce que** le support (52 ; 520) est supporté par la commande d'embrayage (50) par l'intermédiaire d'un palier à roulements (53).

14. Dispositif pour embrayage (2) selon la revendication 1, **caractérisé en ce que** la paroi (80 ; 800) du support est cylindrique et le support (52 ; 520) comporte une gorge circonférentielle qui débouche dans la paroi (80 ; 800) cylindrique et **en ce que** le jonc annulaire (70 ; 700) est logé axialement dans la gorge circonférentielle du support.

15. Dispositif de transmission de couple (1), notamment pour un véhicule automobile, comportant au moins :

   • un mécanisme d'embrayage (10) comprenant un diaphragme (20),
   • une commande d'embrayage (50) comprenant :

      ▪ une embase (51), servant de tube guide,
      ▪ un piston d'actionnement (54) mobile axialement par rapport à l'embase (51),
      ▪ une butée d'actionnement (61) fixée axialement sur le piston d'actionnement (54), destinée à venir en appui sur le diaphragme du mécanisme d'embrayage,
      ▪ un ressort de précharge (65), précontraint entre l'embase et le piston d'actionnement,

lequel dispositif de transmission de couple comporte le dispositif pour embrayage (2) selon l'une quelconque des revendications 1 à 14 et **caractérisé en ce que** le jonc annulaire (70 ; 700) est maintenu en contact simultanément sur le couvercle (11) et le support (52 ; 520) par l'intermédiaire du ressort de précharge (65) de la commande d'embrayage (50).


**Patentansprüche**

1. Kupplungsvorrichtung (2) für ein Kraftfahrzeug, umfassend:

   • einen Deckel (11) eines Kupplungsmechanismus (10),
   • einen Träger (52; 520) einer Kupplungssteuerung (50) und
   • einen ringförmigen Befestigungsring (70; 700) des Deckels und des Trägers, derart, dass der Deckel (11) eine Wand (13; 130) aufweist, die einer Wand (80; 800) des Trägers (52; 520) gegenüberliegt, wobei die gegenüberliegenden Wände (13; 130; 80; 800) einen Durchgang (71; 710) für den ringförmigen Ring beim Montieren des Trägers auf den Deckel definieren, **dadurch gekennzeichnet, dass** dieser Durchgang (71; 710) einen ersten Abschnitt, in dem der ringförmige Ring (70; 700) einen ersten Verformungszustand in Bezug auf seine Form im freien Zustand aufweist, und einen zweiten Abschnitt aufweist, in dem sich der ringförmige Ring (70; 700) derart entspannt, um einen zweiten Verformungszustand aufzuweisen, nachdem der Träger (52; 520) auf dem Deckel (11) montiert ist.

2. Kupplungsvorrichtung (2) nach Anspruch 1, **dadurch gekennzeichnet, dass** die Wand (13; 130) des Deckels zylindrisch ist und der Deckel (11) eine umlaufende Kehle (72; 720) aufweist, die in die zylindrische Wand (13; 130) mündet.

3. Kupplungsvorrichtung (2) nach Anspruch 2, **dadurch gekennzeichnet, dass** die Kehle (72; 720) des Deckels eine Schnittstellenfläche (73; 730) mit dem ringförmigen Ring aufweist, wobei die Schnittstellenfläche eine kegelstumpfförmige Form aufweist.

4. Kupplungsvorrichtung (2) nach Anspruch 1, **dadurch gekennzeichnet, dass** die Wand (80; 800) des Trägers (52, 520) einen zylindrischen Abschnitt (82; 820) und einen umlaufenden Rand (81; 810) aufweist, der gegenüber dem zylindrischen Abschnitt (82; 820) vorsteht.

5. Kupplungsvorrichtung (2) nach Anspruch 4, **dadurch gekennzeichnet, dass** der umlaufende Rand (81; 810) einen Schnittstellenbereich (83; 830) mit dem ringförmigen Ring (70; 700) aufweist, wobei der Schnittstellenbereich einen Krümmungsradius aufweist, der sich an die Geometrie des ringförmigen Rings anschmiegt.

6. Kupplungsvorrichtung (2) nach einem der vorhergehenden Ansprüche, **dadurch gekennzeichnet, dass** der Deckel auf seiner zylindrischen Wand (13; 130) eine Lagerscheibe (90; 900) aufweist, die dazu bestimmt ist, den ringförmigen Ring (70; 700) beim Vorgang der Montage der Kupplungssteuerung (50) auf den Kupplungsmechanismus (10) in Position zu halten.

7. Kupplungsvorrichtung (2) nach einem der vorhergehenden Ansprüche 1 bis 6, **dadurch gekennzeichnet, dass** der ringförmige Ring (70) normalerweise offen ist.

8. Kupplungsvorrichtung (2) nach Anspruch 7, **dadurch gekennzeichnet**, das der erste Verformungszustand und der zweite Verformungszustand einer Reduzierung des Außendurchmessers des ringförmigen Rings (70) gegenüber seiner Form im freien Zustand entspricht und dass der Außendurchmesser des ersten Verformungszustands kleiner als der Außendurchmesser des zweiten Verformungszustands ist.

9. Kupplungsvorrichtung (2) nach den Ansprüchen 2 und 4, **dadurch gekennzeichnet, dass** die umlaufende Kehle (72) in die Außenfläche der zylindrischen Wand (13) des Deckels mündet und dass der umlaufende Rand (81) auf der Innenfläche der Wand (80) des Trägers der Kupplungssteuerung angebracht ist.

10. Kupplungsvorrichtung (2) nach einem der vorhergehenden Ansprüche 1 bis 6, **dadurch gekennzeichnet, dass** der ringförmige Ring (700) normalerweise geschlossen ist.

11. Kupplungsvorrichtung (2) nach Anspruch 10, **dadurch gekennzeichnet**, das der erste Verformungszustand und der zweite Verformungszustand einer Vergrößerung des Außendurchmessers des ringförmigen Rings (700) gegenüber seiner Form im freien Zustand entspricht und der Außendurchmesser des ersten Verformungszustands größer als der Außendurchmesser des zweiten Verformungszustands ist.

12. Kupplungsvorrichtung (2) nach den Ansprüchen 2 und 4, **dadurch gekennzeichnet, dass** die umlaufende Kehle (720) in die Innenfläche der zylindrischen Wand (130) des Deckels mündet und dass der umlaufende Rand (810) auf der Außenfläche der Wand (800) des Trägers (520) der Kupplungssteuerung (50) angebracht ist.

13. Kupplungsvorrichtung (2) nach einem der Ansprüche 1 bis 12, **dadurch gekennzeichnet, dass** der Träger (52; 520) von der Kupplungssteuerung (50) mittels eines Wälzlagers (53) getragen ist.

14. Kupplungsvorrichtung (2) nach Anspruch 1, **dadurch gekennzeichnet, dass** die Wand (80; 800) des Trägers zylindrisch ist und der Träger (52; 520) eine umlaufende Kehle aufweist, die in die zylindrische Wand (80; 800) mündet, und dadurch, dass der ringförmige Ring (70; 700) axial in der umlaufenden Kehle des Trägers angeordnet ist.

15. Drehmomentübertragungsvorrichtung (1), insbesondere für ein Kraftfahrzeug, umfassend mindestens:

    • einen Kupplungsmechanismus (10), umfassend eine Membran (20),
    • eine Kupplungssteuerung (50), umfassend:
    • einen Sockel (51), der als Führungsrohr dient,
    • einen Betätigungskolben (54), der in Bezug auf den Sockel (51) axial beweglich ist,
    • einen Betätigungsanschlag (61), der auf dem Betätigungskolben (54) axial befestigt ist, der dazu bestimmt ist, auf der Membran des Kupplungsmechanismus zur Anlage zu kommen,
    • eine Vorspannfeder (65), die zwischen dem Sockel und dem Betätigungskolben vorgespannt ist, wobei die Drehmomentübertragungsvorrichtung die Kupplungsvorrichtung (2) nach einem der Ansprüche 1 bis 14 aufweist und **dadurch gekennzeichnet ist, dass** der ringförmige Ring (70; 700) gleichzeitig auf dem Deckel (11) und dem Träger (52; 520) durch die Vorspannfeder (65) der Kupplungssteuerung (50) in Kontakt gehalten wird.

**Claims**

1. Motor vehicle clutch device (2), comprising:

    • a cover (11) of a clutch mechanism (10),
    • a support (52; 520) of a clutch control (50), and
    • an annular ring (70; 700) for fastening the cover and the support,

    such that the cover (11) comprises a wall (13; 130) facing a wall (80; 800) of the support (52; 520), the said facing walls (13; 130; 80; 800) defining a passage (71; 710) for the annular ring during the assembly of the support on the cover, **characterized in that** this passage (71; 710) has a first portion in which the annular ring (70; 700) has a first deformation state with respect to its shape in the free state, and a second portion in which the annular ring (70; 700) relaxes so as to have a second deformation state once the support (52; 520) has been assembled on the cover (11).

2. Clutch device (2) according to Claim 1, **characterized in that** the wall (13; 130) of the cover is cylindrical and the cover (11) comprises a circumferential groove (72, 720) which opens into the cylindrical wall (13; 130).

3. Clutch device (2) according to Claim 2, **characterized in that** the groove (72, 720) of the cover comprises an interface surface (73; 730) with the said annular ring, the said interface surface having a frustoconical shape.

4. Clutch device (2) according to Claim 1, **characterized in that** the wall (80; 800) of the support (52, 520) comprises a cylindrical portion (82; 820) and a circumferential rim (81; 810) projecting with respect to the cylindrical portion (82; 820).

5. Clutch device (2) according to Claim 4, **characterized in that** the circumferential rim (81; 810) comprises an interface region (83; 830) with the said annular ring (70; 700), the said interface region having a radius of curvature which follows the geometry of the annular ring.

6. Clutch device (2) according to any one of the preceding claims, **characterized in that** the cover supports on its cylindrical wall (13; 130) a storage washer (90; 900) intended to keep the annular ring (70; 700) in position during the operation of assembling the clutch control (50) on the clutch mechanism (10).

7. Clutch device (2) according to any one of Claims 1 to 6, **characterized in that** the annular ring (70) is normally open.

8. Clutch device (2) according to Claim 7, **characterized in that** the first deformation state and the second deformation state correspond to a reduction of the outside diameter of the annular ring (70) with respect to its shape in the free state, and **in that** the outside diameter of the first deformation state is less than the outside diameter of the second deformation state.

9. Clutch device (2) according to Claims 2 and 4, **characterized in that** the circumferential groove (72) opens into the outer surface of the cylindrical wall (13) of the cover, and **in that** the circumferential rim (81) is implanted on the inner surface of the wall (80) of the clutch control support.

10. Clutch device (2) according to any one of Claims 1 to 6, **characterized in that** the annular ring (700) is normally closed.

11. Clutch device (2) according to Claim 10, **characterized in that** the first deformation state and the second deformation state correspond to an increase of the outside diameter of the annular ring (700) with respect to its shape in the free state and the outside diameter of the first deformation state is greater than the outside diameter of the second deformation state.

12. Clutch device (2) according to Claims 2 and 4, **characterized in that** the circumferential groove (720) opens into the inner surface of the cylindrical wall (130) of the cover, and **in that** the circumferential rim (810) is implanted on the outer surface of the wall (800) of the support (520) of the clutch control (50).

13. Clutch device (2) according to any one of Claims 1 to 12, **characterized in that** the support (52; 520) is supported by the clutch control (50) via a rolling bearing (53).

14. Clutch device (2) according to Claim 1, **characterized in that** the wall (80; 800) of the support is cylindrical and the support (52; 520) comprises a circumferential groove which opens into the cylindrical wall (80; 800), and **in that** the annular ring (70; 700) is housed axially in the circumferential groove of the support.

15. Torque transmission device (1), in particular for a motor vehicle, comprising at least:

- a clutch mechanism (10) comprising a diaphragm (20),
- a clutch control (50) comprising:

  - a base (51) serving as a guide tube,
  - an actuating piston (54) which is movable axially with respect to the base (51),
  - an actuating bearing (61) fastened axially to the actuating piston (54) and intended to press on the diaphragm of the clutch mechanism,
  - a preload spring (65) which is prestressed between the base and the actuating piston,

which torque transmission device comprises the clutch device (2) according to any one of Claims 1 to 14 and is **characterized in that** the annular ring (70; 700) is held in simultaneous contact on the cover (11) and the support (52; 520) via the preload spring (65) of the clutch control (50).

Fig. 1

Fig. 2

52  80  82  70  83  81  84  71  2  90

12

91

92

95

α

DC

DS

73  72  13

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 102009030974 A1
- FR 2082870